# EUROPEAN PATENT APPLICATION

(11) **EP 4 640 480 A1**
(43) Date of publication of application: **29.10.2025**
(21) Application number: 23905929.8
(22) Date of filing: 19.12.2023
(51) Int. Cl.: B60L 53/60

(54) **POWER DISTRIBUTION METHOD FOR DIRECT-CURRENT CHARGING PILE**

(30) Priority: 23.12.2022 CN 202211660665
(71) Applicant: Wanbang Digital Energy Co., Ltd., Changzhou, Jiangsu 213100 (CN)
(72) Inventor: QIN, Chen, Changzhou, Jiangsu 213100 (CN); ZHOU, Fei, Changzhou, Jiangsu 213100 (CN)
(74) Representative: Becker Kurig & Partner Patentanwälte mbB
(86) International application number: PCT/CN2023/139750
(87) International publication number: WO 2024/131766

(57) **Abstract**

The present invention relates to the technical field of direct-current charging piles. Disclosed is a power distribution method for a direct-current charging pile, comprising the following steps: S101, determining whether a charging pile is in a single-gun charging state; S102, acquiring an operation state of the charging gun, if the charging gun is in an insulation boosting state, performing S103, and if the charging gun is in a charging state, performing S104; step S103, distributing a power supply module group closest to the charging gun to the charging gun, and performing insulation boosting; step S104; acquiring demanded power of a vehicle end in real time, calculating the number of required power supply module groups in real time according to the demanded power, and comparing the number of required power supply module groups with the number of currently distributed power supply module groups so as to cut in or cut out the power supply module groups until the number of the currently distributed power supply module groups is equal to the number of the required power supply module groups. According to the present invention, the power distribution of the charging gun is realized by means of the cut-in and cut-out of the power supply module groups, a power distribution process is smoother, the response speed is effectively improved, the user experience is better, the number of operations on a power replay is reduced, and the probability of safety accidents caused by misoperation is reduced.

## Description

### Technical Field

The invention relates to the technical field of direct-current charging piles, particularly to a power distribution method for direct-current charging pile.

### Description of Related Art

During the charging process of new energy vehicles, the demanded power fluctuates in real-time. At the initial stage of charging, the demanded power is relatively high, necessitating the direct-current (DC) charging pile to activate as many modules as possible to meet the vehicle end requirements. As charging progresses, the demanded power gradually decreases, eliminating the need for the original number of modules. At this juncture, the DC charging pile may deactivate the surplus modules and redistribute them to another charging gun, thereby optimizing the utilization of module resources. The process of module distribution and deployment is referred to as power distribution.

The existing power distribution method involves the overall cut-in and cut-out of modules used by a single charging gun. When power distribution is triggered at a certain point due to changes in vehicle end requirements, all modules used by that charging gun will first reduce current, cut out the power relay, and then boost the voltage. This approach results in significant output current fluctuations during the switching process, leading to a poor user experience.

### SUMMARY

The technical problem to be solved by the present invention is to overcome the deficiencies of the existing technology and provide a power distribution method for direct-current charging pile.

To address the aforementioned technical issues, the technical solution of the present invention is as follows:

A power distribution method for direct-current charging pile, comprising the following steps:
Step S101: Obtaining the connection state between each charging gun in the direct-current charging pile and the vehicle end, and determining whether the direct-current charging pile is in a single-gun charging state, and if yes, performing step S102;
Step S102: Obtaining the operation state of the charging gun, if the charging gun is in an insulation boosting state, performing step S103, and if the charging gun is in a charging state, performing step S104;
Step S103: Distributing the power supply module group closest to the charging gun to the charging gun, enabling the charging gun to perform insulation boosting, and after the boosting is completed, performing step S104;
Step S104: Acquiring the demanded power from the vehicle end in real time, calculating the number of required power supply module groups in real time based on the demanded power, and comparing the number of power supply module groups currently distributed to the charging gun with the number of required power supply module groups; if the number of currently distributed power supply module groups is greater than the number of required power supply module groups, cutting out the power supply module groups; if the number of currently distributed power supply module groups is less than the number of required power supply module groups, cutting in the idle power supply module groups, until the number of currently distributed power supply module groups equals the number of required power supply module groups.

As a preferred embodiment of the power distribution method for direct-current charging pile of the present invention, wherein: in step S101, if the direct-current charging pile is in a multi-gun charging state, the following steps are comprised:
Step S105: Obtaining the operation state of each charging gun, if all charging guns are in an insulation boosting state, performing step S106, if there are charging guns simultaneously in insulation boosting state and charging state, performing step S107, if all charging guns are in a charging state, performing step S108;
Step S106: Distributing the power supply module groups closest to each charging gun to the corresponding charging gun, enabling each charging gun to perform insulation boosting, after the boosting is completed, performing step S108;
Step S107: Determining whether there are idle power supply module groups, if affirmative, distributing the idle power supply module group closest to each charging gun in the insulation boosting state to the corresponding charging gun to perform insulation boosting, if negative, cutting out the power supply module group that is farthest from its own charging gun among the power supply module groups distributed to the charging guns in the charging state, then distributing this power supply module group to the corresponding charging gun in the insulation boosting state to perform insulation boosting, after all charging guns complete the boosting, performing step S108;
Step S108: Acquiring the demanded power from the vehicle end connected to each charging gun in real time, if the number of power supply module groups required by all charging guns is less than or equal to the total number of power supply module groups within the direct-current charging pile, calculating the number of power supply module groups required for each vehicle end in real time based on the demanded power of the vehicle end, and comparing the number of power supply module groups currently distributed to the corresponding charging gun with the number of required power supply module groups, if the number of currently distributed power supply module groups is greater than the number of required power supply module groups, cutting out the power supply module groups; if the number of currently distributed power supply module groups is less than the number of required power supply module groups, cutting in the idle power supply module groups, until the number of currently distributed power supply module groups equals the number of required power supply module groups; if the number of power supply module groups required by all charging guns is greater than the total number of power supply module groups within the direct-current charging pile, distributing more of the power supply module groups to charging guns with higher demanded power than to the charging guns with lower demanded power, while ensuring that each charging gun is distributed with at least one power supply module group.

As a preferred embodiment of the power distribution method for direct-current charging pile according to the present invention, wherein: when any charging gun is cut out from the power supply module group, the cut-out priority of the power supply module group is determined based on the distance between the power supply module group currently distributed to the charging gun and the charging gun.

The greater the distance from the charging gun, the higher the cut-out priority of the power supply module group.

As a preferred embodiment of the power distribution method for direct-current charging pile according to the present invention, wherein: when any charging gun is cut in the power supply module group, the cut-in priority of power supply module groups is determined based on the distance between the idle power supply module groups and the charging gun.

The smaller the distance from the charging gun, the higher the cut-in priority of the power supply module group.

As a preferred embodiment of the power distribution method for direct-current charging pile according to the present disclosure, when any power supply module group is cut out, the following steps are comprised:
Reducing the current of the corresponding power supply module group to 0;
Cutting out the power relay of the corresponding power supply module group;
Reducing the voltage of the corresponding power supply module group to 0.

As a preferred embodiment of the power distribution method for direct-current charging pile according to the present invention, wherein: when any power supply module group is cut in, the following steps are comprised:
Boosting the voltage of the corresponding power supply module group to equal the voltage of the corresponding vehicle end battery;
Closing the power relay of the corresponding power supply module group;
Increasing the current of the corresponding power supply module group to a predetermined value.

As a preferred embodiment of the power distribution method for direct-current charging pile according to the present invention, if the number of currently distributed power supply module groups is greater than the number of required power supply module groups, cutting out the power supply module groups; if the number of currently distributed power supply module groups is less than the number of required power supply module groups, cutting in the idle power supply module groups, and the following steps are comprised:
When the number of currently distributed power supply module groups is less than the number of required power supply module groups, cutting in the power supply module groups immediately;
When the number of currently distributed power supply module groups is greater than the number of required power supply module groups, obtaining the number of required power supply module groups continuously, and if the number of currently distributed power supply module groups persistently exceeds the number of required power supply module groups within a time T, cutting out the power supply module groups.

As a preferred embodiment of the power distribution method for direct-current charging pile according to the present invention, the time T is 3 to 5 minutes.

The advantageous effects of the present invention are as follows:
(1) The present invention achieves power distribution of the charging gun through the cut-in and cut-out of power supply modules, resulting in a smoother power distribution process, effectively enhancing response speed, and providing an improved user experience.
(2) In the power distribution process of the present invention, an increase in the number of required power supply modules takes effect immediately, whereas a decrease in the number of required power supply modules only takes effect after a sustained period. This mechanism prevents frequent power distribution triggers due to fluctuating demands from the vehicle end, thereby reducing the frequency of operations on the power relays and lowering the probability of safety incidents caused by operational errors.

### BRIEF DESCRIPTION OF THE DRAWINGS

To provide a clearer explanation of the technical solutions in the embodiments of the present invention, a brief introduction to the drawings required in the description of the embodiments will be provided below. Evidently, the drawings described below are merely some embodiments of the present invention. Those skilled in the art may, without exerting creative effort, obtain other drawings based on these illustrations.

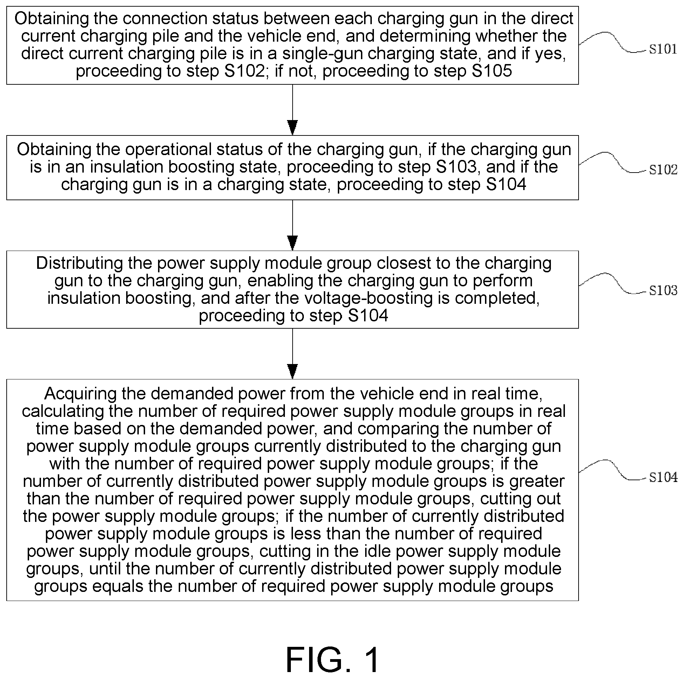

FIG. 1 illustrates the procedural flow of steps S101 through S104 in the power distribution method for direct-current charging pile provided by the present invention.

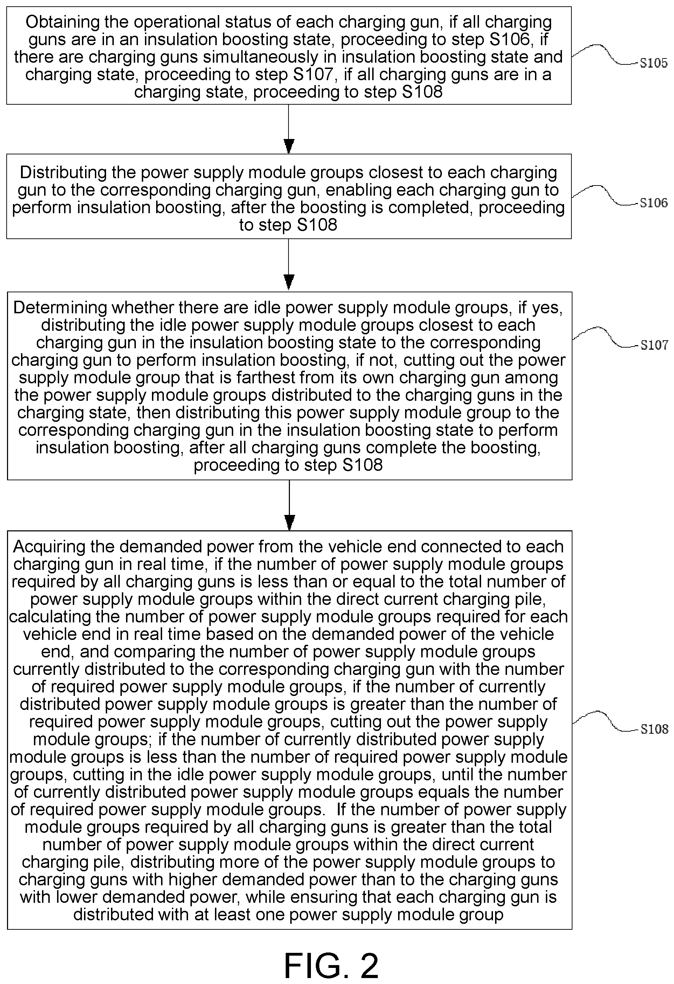

FIG. 2 illustrates the procedural flow of steps S105 through S108 in the power distribution method for direct-current charging pile provided by the present invention.

### DESCRIPTION OF THE EMBODIMENTS

In order to facilitate comprehension of the content of the present invention, further detailed explanation of the present invention is provided below based on specific embodiments and in conjunction with the accompanying drawings.

An embodiment of the present invention provides a power distribution method for direct-current charging pile. The method comprises steps S101 through S108, with the specific steps described as follows:
Step S101: Obtaining the connection state between each charging gun in the direct-current charging pile and the vehicle end, and determining whether the direct-current charging pile is in a single-gun charging state, and if yes, performing step S102; if not, performing step S105.

Specifically, when determining whether each charging gun in the direct-current charging pile is connected to the vehicle end, if there is only one charging gun connected to the vehicle end, it indicates that the direct-current charging pile is in a single-gun charging state. If multiple charging guns are simultaneously connected to the vehicle end, it indicates that the direct-current charging pile is in a multi-gun charging state.

Step S102: Obtaining the operation state of the charging gun, if the charging gun is in an insulation boosting state, performing step S103, and if the charging gun is in a charging state, performing step S104.

Specifically, in a single-gun charging state, the working state of the charging gun connected to the vehicle end is determined. That is, it is determined whether the charging gun is in an insulation boosting state or a charging state.

Step S103: Distributing the power supply module group closest to the charging gun to the charging gun, enabling the charging gun to perform insulation boosting, and after the boosting is completed, performing step S104.

Specifically, if the charging gun is in an insulated boosting state, the power supply module group closest to that charging gun needs to be distributed to the charging gun, enabling the charging gun to perform insulation boosting. After the charging gun has boosted the voltage to equal the battery voltage of the vehicle end, the charging gun may then charge the vehicle end battery, thus entering the charging state.

Step S104: Acquiring the demanded power from the vehicle end in real time, calculating the number of required power supply module groups in real time based on the demanded power, and comparing the number of power supply module groups currently distributed to the charging gun with the number of required power supply module groups; if the number of currently distributed power supply module groups is greater than the number of required power supply module groups, cutting out the power supply module groups; if the number of currently distributed power supply module groups is less than the number of required power supply module groups, cutting in the idle power supply module groups, until the number of currently distributed power supply module groups equals the number of required power supply module groups.

Specifically, the direct-current charging pile calculates the number of required power supply module groups in real time based on the demanded power transmitted by the vehicle end. If the number of currently distributed power supply module groups is greater than the number of required power supply module groups, the power supply module groups currently distributed to the charging gun are cut out, thereby reducing the number of power supply module groups distributed to the charging gun. Conversely, if the number of currently distributed power supply module groups is less than the number of required power supply module groups, the idle power supply module groups are cut in, thereby increasing the number of power supply module groups distributed to the charging gun.

It is hereby specified that when the charging gun is cut out from the power supply module groups, the cut-out priority of the power supply module groups may be determined based on the distance between the power supply module groups currently distributed to the charging gun and the charging gun. Specifically, the greater the distance between a power supply module group and the charging gun, the higher the cut-out priority of the power supply module group. When the charging gun is cut in the power supply module groups, the cut-in priority of the power supply module groups may be determined based on the distance between the idle power supply module groups and the charging gun. Specifically, the smaller the distance between a power supply module group and the charging gun, the higher the cut-in priority of the power supply module group.

Step S105: Obtaining the operation state of each charging gun, if all charging guns are in an insulation boosting state, performing step S106, if there are charging guns simultaneously in insulation boosting state and charging state, performing step S107, if all charging guns are in a charging state, performing step S108.

Specifically, in a multi-gun charging state, there are three scenarios. First, when all charging guns are in an insulation boosting state, each charging gun first needs to undergo insulation boosting. Only after the boosting process is completed may charging of the vehicle end battery commence. Second, when some charging guns are in a charging state while others are in an insulation boosting state, in this case, the charging guns in the insulation boosting state need to undergo insulation boosting to enable the charging guns to charge the vehicle end battery, thereby transitioning to the charging state. The third scenario is that all charging guns are in the charging state, meaning none of the charging guns require insulation boosting.

Step S106: Distributing the power supply module groups closest to each charging gun to the corresponding charging gun, enabling each charging gun to perform insulation boosting, after the boosting is completed, performing step S108.

Specifically, the power supply module group closest to each charging gun may be distributed to the corresponding charging gun. It is noteworthy that during the insulation boosting stage, one power supply module among the power supply module groups distributed to each charging gun is sufficient to supply the charging gun for insulation boosting purposes.

Step S107: Determining whether there are idle power supply module groups, if affirmative, distributing the idle power supply module groups closest to each charging gun in the insulation boosting state to the corresponding charging gun to perform insulation boosting, if negative, cutting out the power supply module group that is farthest from its own charging gun among the power supply module groups distributed to the charging guns in the charging state, then distributing this power supply module group to the corresponding charging gun in the insulation boosting state to perform insulation boosting, after all charging guns complete the boosting, performing step S108.

Specifically, if there are power supply module groups within the direct-current charging pile that have not been distributed, these power supply module groups are considered idle power supply module groups, which may be controlled by the direct-current charging pile for distribution at any time. In such circumstances, the direct-current charging pile may distribute the idle power supply module group that is closest to the charging gun in insulation boosting state to the corresponding charging gun, enabling the charging gun to perform insulation boosting. In the event that all power supply module groups within the direct-current charging pile have been distributed to charging guns in charging state, it becomes necessary to cut out one power supply module group from those distributed to charging guns in charging state, thereby creating an idle power supply module group, which may subsequently be distributed to a charging gun in insulation boosting state. This allows the charging gun to perform insulation boosting and, upon completion of the boosting, to proceed with charging.

It should be noted that when cutting out a power supply module group from a charging gun in a charging state, the power supply module group to be cut out may be the one located at the greatest distance from the charging gun.

Step S108: Acquiring the demanded power from the vehicle end connected to each charging gun in real time, if the number of power supply module groups required by all charging guns is less than or equal to the total number of power supply module groups within the direct-current charging pile, calculating the number of power supply module groups required for each vehicle end in real time based on the demanded power of the vehicle end, and comparing the number of power supply module groups currently distributed to the corresponding charging gun with the number of required power supply module groups, if the number of currently distributed power supply module groups is greater than the number of required power supply module groups, cutting out the power supply module groups; if the number of currently distributed power supply module groups is less than the number of required power supply module groups, cutting in the idle power supply module groups, until the number of currently distributed power supply module groups equals the number of required power supply module groups. If the number of power supply module groups required by all charging guns is greater than the total number of power supply module groups within the direct-current charging pile, distributing more of the power supply module groups to charging guns with higher demanded power than to the charging guns with lower demanded power, while ensuring that each charging gun is distributed with at least one power supply module group.

Specifically, if the number of power supply module groups required by all charging guns is less than or equal to the total number of power supply module groups within the direct-current charging pile, the number of required power supply module groups for each vehicle end may be calculated in real time based on the demanded power of each vehicle end. Subsequently, a comparison may be made between the number of power supply module groups currently distributed to each charging gun and the number of required power supply module groups. In the event that the number of currently distributed power supply module groups is greater than the number of required power supply module groups, a power supply module group currently distributed to the charging gun is cut out, thereby reducing the number of power supply module groups distributed to the charging gun. Conversely, if the number of currently distributed power supply module groups is less than the number of required power supply module groups, the idle power supply module groups may be cut in, thereby increasing the number of power supply module groups distributed to the charging gun.

It should be noted that when a power supply module group is cut out from the charging gun, the cut-out priority of the power supply module group is determined based on the distance between the power supply module group currently distributed to the charging gun and the charging gun. In this regard, the greater the distance between the power supply module group and the charging gun, the higher the cut-out priority of the power supply module group. When a power supply module group is cut in the charging gun, the cut-in priority of the power supply module group is determined based on the distance between the idle power supply module group and the charging gun. In this regard, the smaller the distance between the power supply module group and the charging gun, the higher the cut-in priority of the power supply module group.

If the number of power supply module groups required by all charging guns is greater than the total number of power supply module groups available in the direct-current charging pile, then, under the premise of ensuring that each charging gun can maintain a charging state, the distribution of power supply module groups may be prioritized based on the demanded power of the charging guns, whereby charging guns with higher demanded power shall be distributed a greater number of power supply module groups than charging guns with lower demanded power.

Furthermore, it should be noted that when cutting in or cutting out the power supply module groups, the following principles must be adhered to:
When the number of currently distributed power supply module groups is less than the number of required power supply module groups, the power supply module groups may be cut in immediately; when the number of currently distributed power supply module groups is greater than the number of required power supply module groups, the number of required power supply module groups is obtained continuously, and if the number of currently distributed power supply module groups persistently exceeds the number of required power supply module groups within a time T, the power supply module groups are cut out.

This mechanism prevents frequent power distribution triggers due to fluctuating demands from the vehicle end and avoids adverse impact on the user experience.

In the present embodiment, the aforementioned time T is 5 minutes.

Below is an illustrative example of a 120KW dual-gun charging pile. The dual-gun charging pile comprises four 30KW power supply module groups, designated from left to right as module group one, module group two, module group three, and module group four. The two charging guns are respectively designated as charging gun one and charging gun two. Specifically, the distances between module group one, module group two, module group three, and module group four and charging gun one progressively increase. Conversely, the distances between module group one, module group two, module group three, and module group four and charging gun two progressively decrease.

First, based on the connection state of charging gun one and charging gun two with the vehicle end, it is determined whether the charging pile is in a single-gun charging state or a dual-gun charging state.

If the charging pile is in a single-gun charging state, the operation state of that charging gun is obtained. If the charging pile is in an insulation boosting state, the power supply module group closest to that charging gun is distributed to the charging gun, enabling the charging gun to perform insulation boosting until the voltage equals the voltage of the internal battery of the vehicle end, after which the charging gun will commence charging the vehicle end battery, entering the charging state.

After entering the normal charging stage, the direct-current charging pile obtains the demanded power from the vehicle end in real time, and calculates the number of required power supply module groups based on this demanded power. Then the direct-current charging pile compares the number of power supply module groups currently distributed to the charging gun with the number of required power supply module groups, and cuts in or cuts out the power supply module groups based on the comparison results. Specifically as follows:
If the number of currently distributed power supply module groups is greater than the number of required power supply module groups, the power supply module groups may be cut out until the number of currently distributed power supply module groups equals the number of required power supply module groups.

When charging gun one is in a normal charging state, the sequence for cutting out power supply module groups is module group four →module group three →module group two →module group one. When charging gun two is in a normal charging state, the sequence for cutting out power supply module groups is module group one →module group two →module group three → module group four. Specifically, the priority for cutting out power supply module groups is determined based on the distance between the power supply module groups currently distributed to the charging gun and the charging gun, whereby the greater the distance between a power supply module group and the charging gun, the higher the priority for cutting in the power supply module group.

It should be noted that, when any power supply module group is cut in, the following steps are comprised:
Step a: Boosting the voltage of the corresponding power supply module group to equal the voltage of the corresponding vehicle end battery;
Step b: Closing the power relay of the corresponding power supply module group;
Step c: Increasing the current of the corresponding power supply module group to the predetermined value.

If the number of currently distributed power supply module groups is less than the number of required power supply module groups, idle power supply module groups may be cut in until the number of currently distributed power supply module groups equals the number of required power supply module groups.

When charging gun one is in normal charging state, the sequence for cutting in the power supply module groups is module group one →module group two →module group three →module group four. When charging gun two is in normal charging state, the sequence for cutting out the power supply module groups is module group four → module group three → module group two →module group one. That is, the priority for cutting in the power supply module groups is determined by the distance between idle power supply module groups and the charging gun, the smaller the distance from the charging gun, the higher the cut-in priority of the power supply module group.

It should be noted that, when any power supply module group is cut out, the following steps are comprised:
Step d: Reducing the current of the corresponding power supply module group to 0;
Step e: Cutting out the power relay of the corresponding power supply module group;
Step f: Reducing the voltage of the corresponding power supply module group to 0.

For the specific changes in the cut-in and cut-out of power supply module groups under a single-gun charging state, please refer to Table 1. Taking the process of increasing the required module group for charging gun one as an example: In the first row, prior to the change, the number of power supply module groups distributed to charging gun one and charging gun two are both 0, therefore module group one, module group two, module group three, and module group four are all undistributed. After the change, the number of power supply module groups distributed to charging gun one is 1, and the number of power supply module groups distributed to charging gun two is 0. Referring to the column labeled "Distributed Gun Number" after the change, power supply module group 1 is distributed to charging gun one, while module group two, module group three, and module group four remain undistributed.

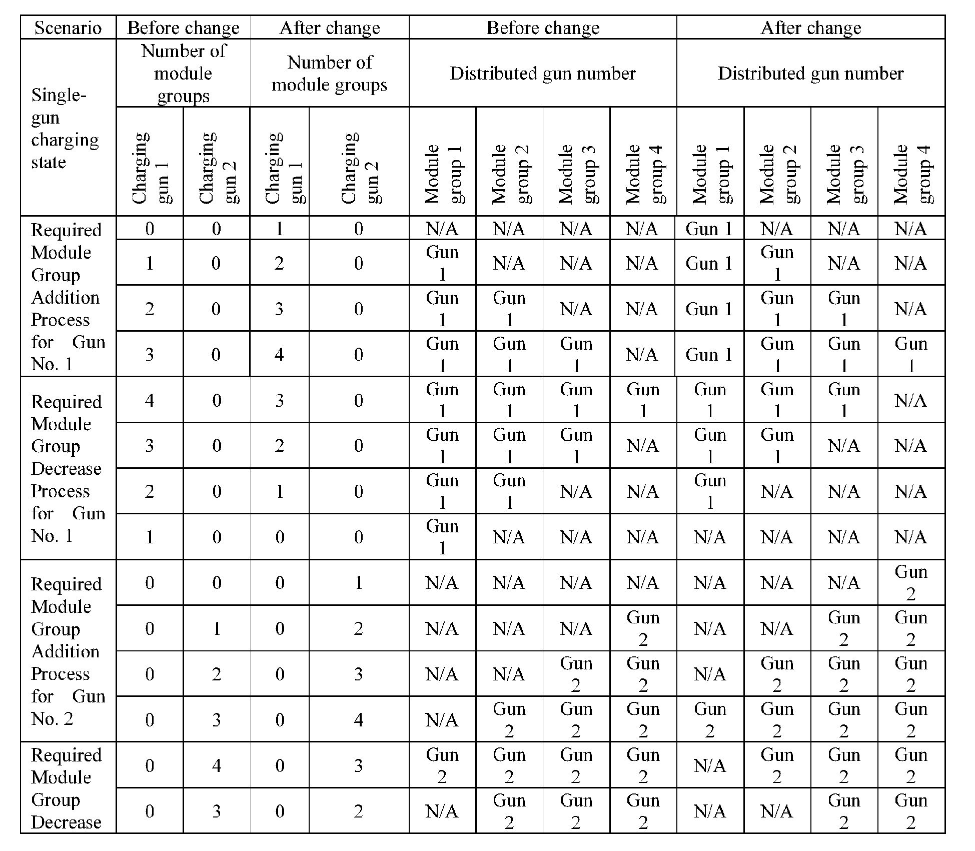

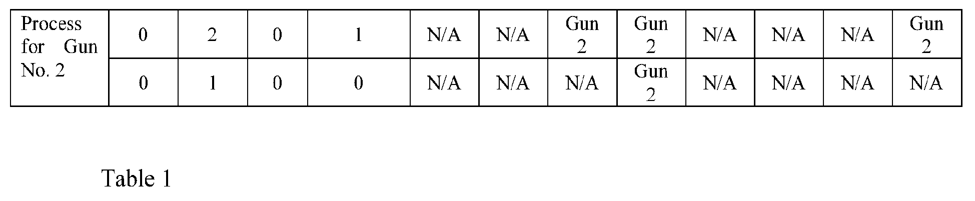

If the charging pile is in a multi-gun charging state, the operation state of charging gun one and charging gun two may be obtained first. Specifically, the operation state is categorized into the following three circumstances:

Scenario one: Both charging gun one and charging gun two are in insulation boosting state. The power supply module one is distributed to charging gun one to perform insulation boosting. The power supply module four is distributed to charging gun two to perform insulation boosting. Following insulation boosting, charging gun one and charging gun two respectively charge the vehicle end batteries, i.e., both are in charging state.

Scenario two: One charging gun is in the charging state, while another charging gun is in the insulation stage.

When charging gun one is in a charging state and charging gun two is in an insulation boosting state, if there is an idle power supply module group available, module group four may be distributed to charging gun two for insulation boosting purposes. In the absence of an idle power supply module group (i.e., when all power supply module groups have been distributed to charging gun one), charging gun one may be cut out from module group four, which may then be distributed to charging gun two for insulation boosting. Following the insulation boost, charging gun one and charging gun two shall respectively charge the vehicle end batteries, both thereby entering into a charging state.

When charging gun two is in a charging state and charging gun one is in an insulation boosting state, if there is an idle power supply module group available, power supply module group one may be distributed to charging gun one for insulation boosting purposes. In the absence of idle power supply module groups (i.e., all power supply module groups have been distributed to charging gun two), charging gun two may be cut out from power supply module group one, which may subsequently be distributed to charging gun one for insulation boosting. Following the insulation boosting process, both charging gun one and charging gun two may proceed to charge the vehicle end battery, thereby both operating in a charging state.

Scenario three: Both charging gun one and charging gun two are in the charging state.

At this time, the charging pile obtains the demanded power from the vehicle ends connected to charging gun one and charging gun two in real time. If the number of power supply module groups required by charging gun one and charging gun two is less than or equal to the total number of power supply module groups in the charging pile, namely four groups, the charging pile may calculate the number of required power supply module groups for each vehicle end in real time based on the demanded power of the vehicle end, and compare the number of power supply module groups currently distributed to the corresponding charging gun with the number of required power supply module groups. If the number of currently distributed power supply module groups is greater than the number of required power supply module groups, power supply module groups may be cut out; if the number of currently distributed power supply module groups is less than the number of required power supply module groups, idle power supply module groups may be cut in, until the number of currently distributed power supply module groups equals the number of required power supply module groups.

If the number of power supply module groups required by charging gun one and charging gun two exceeds four, the charging gun with higher demanded power shall be distributed a greater number of power supply module groups than the charging gun with lower demanded power, provided that each charging gun may be distributed with at least one power supply module group. Specifically, if the demanded power of charging gun one is significantly greater than that of charging gun two, module group one, module group two, and module group three may be distributed to charging gun one, while module group four may be distributed to charging gun two, thereby ensuring that both charging gun one and charging gun two can maintain charging state.

The specific cut-in and cut-out variations of the power supply module groups during the dual-gun charging state are set forth in Table 2.

Take case 4 as an example, where charging gun one is in a charging state and charging gun two is in an insulation boosting state. Initially, prior to the change, charging gun one is distributed with four power supply module groups, while charging gun two is distributed with zero power supply module groups. Specifically, module group one, module group two, module group three, and module group four are all distributed to charging gun one. After the change, charging gun one is distributed with three power supply module groups, while charging gun one is distributed with one power supply module group. At this point, module group one, module group two, and module group three are distributed to charging gun one, and two module group four is distributed to charging gun two to facilitate insulation boosting for charging gun two.

Take case 6 of dual-gun charging as an example, firstly, the demanded power of charging gun two is greater than the demanded power of charging gun one. Therefore, prior to the change, charging gun one is distributed with one power supply module group, while charging gun two is distributed with three power supply module groups. At this stage, module group one is distributed to charging gun one, and module group two, module group three, and module group four are all distributed to charging gun two. As charging progresses, the demanded power of charging gun two decreases, and the number of power supply module groups within charging gun two is greater than the number of required power supply module groups, resulting in module group two being cut out from charging gun two. The cut out power supply module group becomes an idle power supply module group and is subsequently distributed to charging gun one. Consequently, following the change, charging gun one is distributed with two power supply module groups, and charging gun two is distributed with two power supply module groups. At this point, module group one and module group two are distributed to charging gun one, while module group three and module group four are distributed to charging gun two.

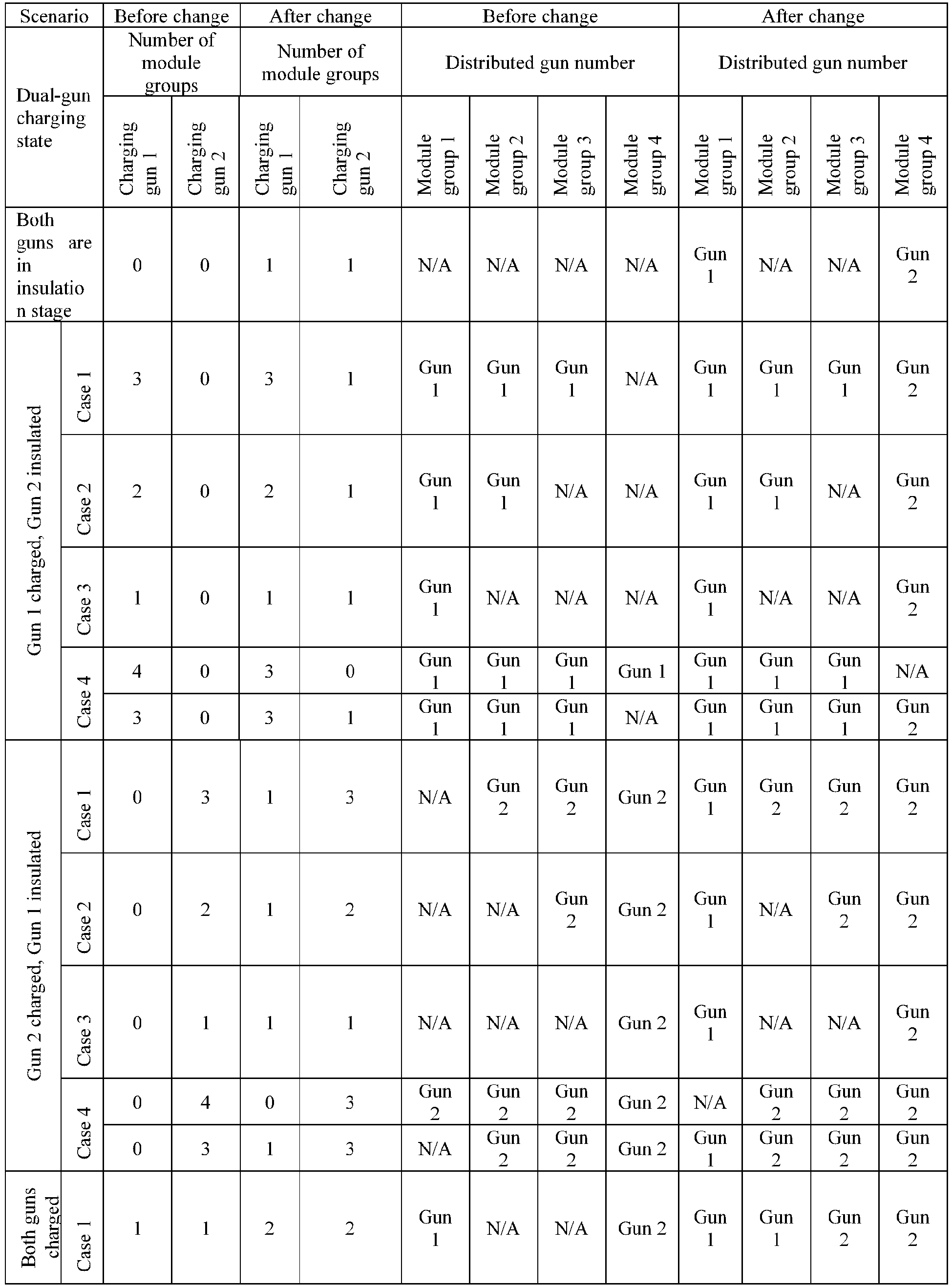

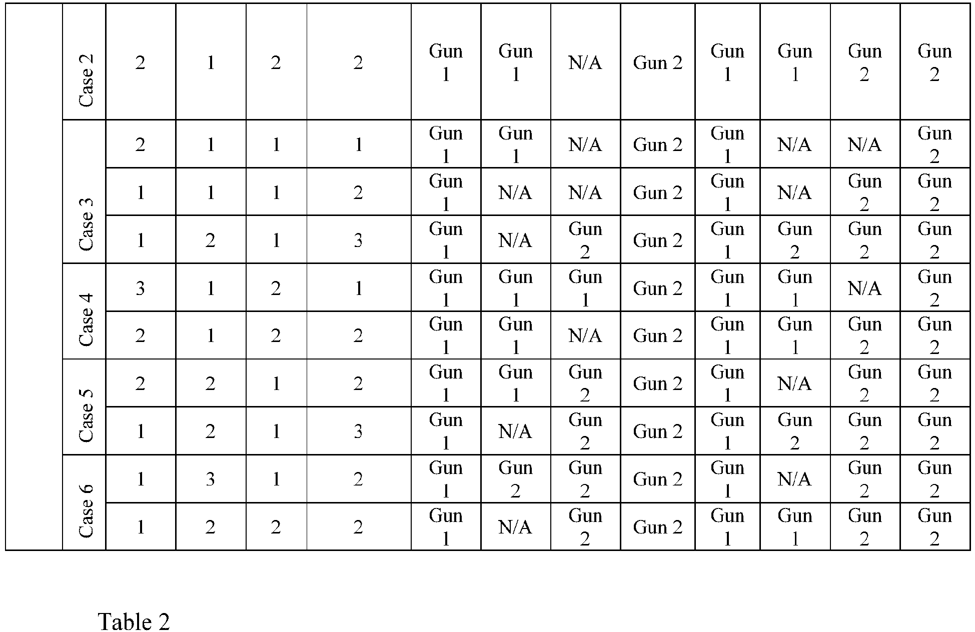

Therefore, the technical solution of the present invention achieves power distribution of the charging gun through the cut-in and cut-out of the power supply module groups. The power distribution process is more seamless, effectively enhancing response time, improving user experience, and reducing the number of operations of the power relay, thereby decreasing the probability of safety incidents caused by operational errors.

In addition to the aforementioned embodiments, the present invention may have other implementations; any technical solutions formed by equivalent substitution or equivalent transformation fall within the scope claimed by the present invention.

## Claims

1. A power distribution method for a direct-current charging pile, **characterized in** comprising the following steps:
step S101: obtaining a connection state between each charging gun in the direct-current charging pile and a vehicle end, and determining whether the direct-current charging pile is in a single-gun charging state, and if yes, performing step S102;
step S102: obtaining an operation state of the charging gun, if the charging gun is in an insulation boosting state, performing step S103, and if the charging gun is in a charging state, performing step S104;
step S103: distributing a power supply module group closest to the charging gun to the charging gun, enabling the charging gun to perform insulation boosting, and after boosting is completed, performing step S104;
step S104: acquiring a demanded power from the vehicle end in real time, calculating a number of required power supply module groups in real time based on the demanded power, and comparing a number of power supply module groups currently distributed to the charging gun with the number of required power supply module groups; if the number of currently distributed power supply module groups is greater than the number of required power supply module groups, cutting out the power supply module groups; if the number of currently distributed power supply module groups is less than the number of required power supply module groups, cutting in idle power supply module groups, until the number of currently distributed power supply module groups equals the number of required power supply module groups.

2. The power distribution method for the direct-current charging pile according to claim 1, **characterized in that**: in the step S101, if the direct-current charging pile is in a multi-gun charging state, the following steps are comprised:
step S105: obtaining the operation state of each of the charging gun, if all of the charging guns are in an insulation boosting state, performing step S106, if there are charging guns simultaneously in the insulation boosting state and the charging state, performing step S107, if all of the charging guns are in the charging state, performing step S108;
step S106: distributing the power supply module groups closest to each of the charging gun to the corresponding charging gun, enabling each of the charging gun to perform the insulation boosting, after the boosting is completed, performing step S108;
step S107: determining whether there are idle power supply module groups, if yes, distributing the idle power supply module group closest to each of the charging gun in the insulation boosting state to the corresponding charging gun to perform the insulation boosting, if not, cutting out the power supply module group that is farthest from its own charging gun among the power supply module groups distributed to the charging guns in the charging state, then distributing the power supply module group to the corresponding charging gun in the insulation boosting state to perform the insulation boosting, after all of the charging guns complete the boosting, performing step S108;
step S108: acquiring the demanded power from the vehicle end connected to each of the charging gun in real time, if a number of power supply module groups required by all of the charging guns is less than or equal to a total number of the power supply module groups within the charging pile, calculating a number of power supply module groups required for each of the vehicle end in real time based on the demanded power of the vehicle end, and comparing the number of power supply module groups currently distributed to the corresponding charging gun with the number of required power supply module groups, if the number of currently distributed power supply module groups is greater than the number of required power supply module groups, cutting out the power supply module groups; if the number of currently distributed power supply module groups is less than the number of required power supply module groups, cutting in the idle power supply module groups, until the number of currently distributed power supply module groups equals the number of required power supply module groups; if the number of power supply module groups required by all of the charging guns is greater than the total number of power supply module groups within the charging pile, distributing more of the power supply module groups to charging guns with higher demanded power than to charging guns with lower demanded power, while ensuring that each of the charging gun is distributed with at least one of the power supply module groups.

3. The power distribution method for the direct-current charging pile according to claim 1, **characterized in that**: when any one of the charging guns is cut out from the power supply module group, a cut-out priority of the power supply module group is determined based on a distance between the power supply module group currently distributed to the charging gun and the charging gun;
wherein the greater the distance from the charging gun, the higher the cut-out priority of the power supply module group.

4. The power distribution method for the direct-current charging pile according to claim 1, **characterized in that**: when any one of the charging guns is cut in the power supply module group, a cut-in priority of the power supply module groups is determined based on a distance between the idle power supply module groups and the charging gun;
wherein the smaller the distance from the charging gun, the higher the cut-in priority of the power supply module group.

5. The power distribution method for the direct-current charging pile according to claim 1, **characterized in that**: when any one of the power supply module groups is cut out, the following steps are comprised:
reducing a current of the corresponding power supply module group to 0;
cutting out a power relay of the corresponding power supply module group;
reducing a voltage of the corresponding power supply module group to 0.

6. The power distribution method for the direct-current charging pile according to claim 1, **characterized in that**: when any one of the power supply module groups is cut in, the following steps are comprised:
boosting a voltage of the corresponding power supply module group to equal a voltage of a corresponding vehicle end battery;
closing a power relay of the corresponding power supply module group;
increasing a current of the corresponding power supply module group to a predetermined value.

7. The power distribution method for the direct-current charging pile according to claim 1 or 2, **characterized in that**: if the number of currently distributed power supply module groups is greater than the number of required power supply module groups, cutting out the power supply module groups; if the number of currently distributed power supply module groups is less than the number of required power supply module groups, cutting in the idle power supply module groups, and the following steps are comprised:
when the number of currently distributed power supply module groups is less than the number of required power supply module groups, cutting in the power supply module groups immediately;
when the number of currently distributed power supply module groups is greater than the number of required power supply module groups, obtaining the number of required power supply module groups continuously, and if the number of currently distributed power supply module groups persistently exceeds the number of required power supply module groups within a time T, cutting out the power supply module groups.

8. The power distribution method for the direct-current charging pile according to claim 7, **characterized in that**: the time T is 3 to 5 minutes.
